# EUROPÄISCHE PATENTANMELDUNG

(11) **EP 4 573 883 A1**
(43) Veröffentlichungstag der Anmeldung: **25.06.2025**
(21) Anmeldenummer: 24210706.8
(22) Anmeldetag: 05.11.2024
(51) Int. Cl.: A01D 89/00

(54) **GUTAUFNEHMER UND ARBEITSGERÄT**

(30) Priorität: 20.12.2023 DE 102023135966
(71) Anmelder: Deere & Company, Moline, IL 61265 (US)
(72) Erfinder: BENOIT-GUERINDON, FLORIAN, 68163 Mannheim (DE); CHAPON, EMMANUEL, 68163 Mannheim (DE); MATTHIEU, DUTERTRE, 68163 Mannheim (DE)
(74) Vertreter: Stein, Stefan

(57) **Zusammenfassung**

Es wird ein Gutaufnehmer (22) für ein landwirtschaftliches Arbeitsgerät (10), mit einem Gehäuse, einer Aufnahmeeinrichtung (34), die sich über wenigstens ein Stützrad (40a, b) auf dem Untergrund (18) abstützt, und wenigstens zwei horizontal beabstandeten Anlenkhebeln (32a, b), die zwischen sich die Aufnahmeeinrichtung (34) aufnehmen, vorgeschlagen, wobei die Aufnahmeeinrichtung (34) von den Anlenkhebeln (32a, b) zumindest im Wesentlichen vertikal verschieblich aufgenommen wird. Darüber hinaus wird ein Arbeitsgerät, insbesondere eine landwirtschaftliche Ballenpresse mit einem Gutaufnehmer vorgeschlagen.

## Beschreibung

Die vorliegende Erfindung betrifft einen Gutaufnehmer für ein landwirtschaftliches Arbeitsgerät, mit einem Gehäuse, einer Aufnahmeeinrichtung, die sich über wenigstens ein Stützrad auf dem Untergrund abstützt, und wenigstens zwei horizontal beabstandeten Anlenkhebeln, die zwischen sich die Aufnahmeeinrichtung aufnehmen, und ein Arbeitsgerät.

Gutaufnehmer sind bekannt. Sie werden an landwirtschaftlichen Arbeitsgeräten, wie beispielsweise an Pressen, Feldhäckslern oder Ladewagen eingesetzt, um Material, insbesondere loses Gut vom Untergrund aufzunehmen. Bei dem losen Gut handelt es sich meist um zuvor geschnittenes Erntegut, beispielsweise in der Art von Heu, Stroh oder Silage. Häufig werden solche Gutaufnehmer auch als Pick-up bezeichnet.

Üblicherweise stützen sich bekannte Gutaufnehmer mittels Stützrädern auf dem Untergrund ab, so dass sie im Einsatz einer Kontur des Untergrunds folgen können. So zeigt beispielsweise die DE202020103608U1 einen Gutaufnehmer, der an gegenüberliegenden Endabschnitten durch jeweils zwei Lenker aufgehängt ist, von denen jeder einerseits gelenkig an einer Aufnahmetrommel und andererseits gelenkig an einem Maschinenrahmenteil gelagert ist.

Ein derartiger Gutaufnehmer sowie ein Arbeitsgerät mit einem Gutaufnehmer besteht aus vielen Einzelteilen, ist aufwändig und damit teuer.

Die der Erfindung zugrunde liegende Aufgabe wird daher darin gesehen, einen Gutaufnehmer und ein Arbeitsgerät mit einem Gutaufnehmer vorzusehen, durch welche die vorgenannten Nachteile überwunden werden.

Die Aufgabe wird erfindungsgemäß durch die Lehre der Patentansprüche 1 und 10 gelöst. Weitere vorteilhafte Ausgestaltungen und Weiterbildungen der Erfindung gehen aus den Unteransprüchen hervor.

Diesbezüglich weist ein Gutaufnehmer für ein landwirtschaftliches Arbeitsgerät ein Gehäuse, eine Aufnahmeeinrichtung und wenigstens zwei horizontal beabstandete Anlenkhebel auf. Zwischen sich tragen die Anlenkhebel die Aufnahmeeinrichtung, die sich über wenigstens ein Stützrad auf dem Untergrund abstützt. Die Aufnahmeeinrichtung wird von den Anlenkhebeln zumindest im Wesentlichen vertikal verschieblich aufgenommen, so dass sie der Kontur des Untergrunds bzw. Veränderungen der Kontur insbesondere quer zur Fahrtrichtung folgen kann. Da die Aufnahmeeinrichtung durch die Anlenkhebeln, die vorzugsweise rechts und links der Aufnahmeeinrichtung angeordnet sind, getragen wird, kann sich die Aufnahmeeinrichtung bezogen auf die beiden Anlenkhebeln zumindest im Wesentlichen vertikal bewegen. Es kann so eine vertikale, wie auch eine pendelnde Bewegung und damit eine Art zusätzlicher Freiheitsgrad realisiert werden. Hierzu ist es nicht notwendig eine feste Pendelachse zu bestimmen. Vielmehr kann die Aufnahmeeinrichtung um eine virtuelle, vertikal verschiebliche Pendelachse pendeln. Bei dem Arbeitsgerät handelt es sich vorzugsweise um eine Presse, insbesondere um eine landwirtschaftliche Presse, beispielsweise eine Presse zur Bildung rundzylindrischer Ballen, also eine Rundballenpresse. Es ist aber auch ein Einsatz an einer Presse zur Bildung von Quaderballen, einem Ladewagen, einem Feldhäcksler oder an jedem anderen geeigneten Arbeitsgerät denkbar. Bei dem zu pressenden Gut handelt es sich insbesondere um Heu, Stroh oder Silage. Es kann sich aber auch um jedes andere, insbesondere landwirtschaftliches Erntegut oder auch um andere Materialien handeln.

Sind die Anlenkhebel an dem Gehäuse um eine im Wesentlichen horizontale, sich quer zur Fahrtrichtung erstreckende Achse pendelnd gelagert, können sie in einfacher Art und Weise einer sich in Fahrtrichtung verändernden Kontur des Untergrunds folgen. Diese um die Achse pendelnde Bewegung kann sich mit der vertikale verschieblichen Pendelbewegung der Aufnahmeeinrichtung überlagern, so dass der Gutaufnehmer in einfacher Art und Weise sowohl Veränderungen des Untergrunds in Fahrtrichtung als auch quer zur Fahrtrichtung ausgleichen kann.

Besonders vorteilhaft ist es, wenn jeder der Anlenkhebel wenigstens ein Führungselement zur insbesondere verschieblichen Lagerung der Aufnahmeeinrichtung aufweist.

Es ist denkbar, dass jeder der Anlenkhebel nur ein Führungselement aufweist. Besonders vorteilhaft ist es aber, wenn wenigstens einer der Anlenkhebel eine Mehrzahl, vorzugsweise zwei Führungselemente aufweist. Diese Führungselemente erstrecken sich insbesondere im Wesentlichen parallel.

Das Führungselement bzw. die Führungselemente können beispielsweise als Schienen oder in jeder anderen geeigneten Ausführungsweise ausgebildet sein. Besonders günstig und/oder einfach in der Herstellung ist es aber, wenn ein Führungselement/die Führungselemente in der Art eines Langlochs bzw. von Langlöchern ausgebildet ist/sind.

Ist an dem Gutaufnehmer ein Förderrotor vorgesehen, so ergibt sich eine besonders günstige Geometrie, wenn er um die Achse rotieren kann bzw. eine Rotationsachse des Förderrotors und die Achse übereinstimmen/kongruent angeordnet sind.

Besonders günstig ist es, wenn die Aufnahmeeinrichtung eine drehbare Fördereinrichtung aufweist. Eine derartige Fördereinrichtung kann beispielsweise in der Art eines Zinkenträgers ausgebildet sein.

Sind der Förderrotor und/oder die Fördereinrichtung durch ein Zugmittelgetriebe antreibbar, so ist dies einfach in der Herstellung und wartungsarm. Ein Zugmittelgetriebe weist üblicherweise zwei oder mehrere Antriebsscheiben bzw. -zahnräder auf, welche von einem Zugmittel umschlungen werden. Da die Aufnahmeeinrichtung in den Anlenkhebeln verschieblich getragen wird bzw. gelagert ist, kann einer Verwindung des Zugmittels vorgebeugt werden. Hierzu kann die Aufnahmeeinrichtung zwischen den Anlenkhebeln und wenigstens eine Antreibsscheibe bzw. ein -zahnrad außerhalb der Anlenkhebel angeordnet sein.

Ist das Zugmittelgetriebe in der Art eines Kettenantriebs ausgebildet, so kann dies einem Rutschen des Zugmittels entgegenwirken und zur Herstellung einer getakteten Antriebsübertragung beitragen.

Besonders vorteilhaft ist es, wenn ein Arbeitsgerät, insbesondere ein landwirtschaftliches Arbeitsgerät, mit einem zuvor beschriebenen Gutaufnehmer ausgestattet wird. Bei einem solchen Arbeitsgerät kann es sich beispielsweise um eine Ballenpresse, hierbei um eine Ballenpresse zur Herstellung sowohl rundzylindrischer Ballen als auch von Quaderballen handeln. Das Arbeitsgerät kann auch ein Feldhäcksler, ein Mähdrescher, ein Ladewagen oder jedes andere geeignete, insbesondere landwirtschaftliche Arbeitsgerät sein.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht eines Arbeitsgerät mit einem Gutaufnehmer mit einer Aufnahmeeinrichtung, die sich über Stützräder auf dem Untergrund abstützt und

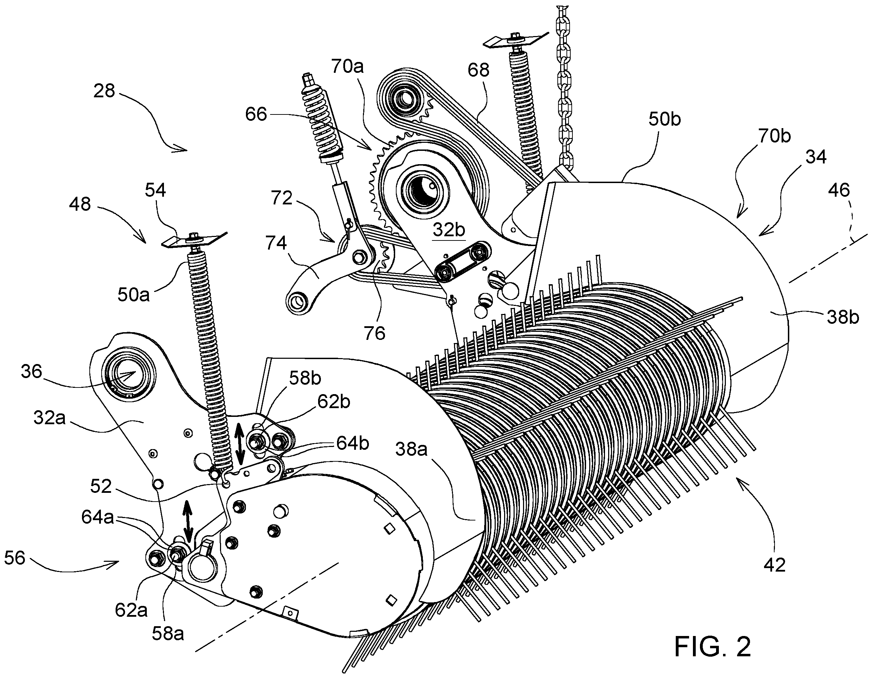

- Fig. 2: eine vergrößerte Darstellung der Aufnahmeeinrichtung und
- Fig. 3: ein rechter Seitenbereich der Aufnahmeeinrichtung in teilweiser Explosionsdarstellung.

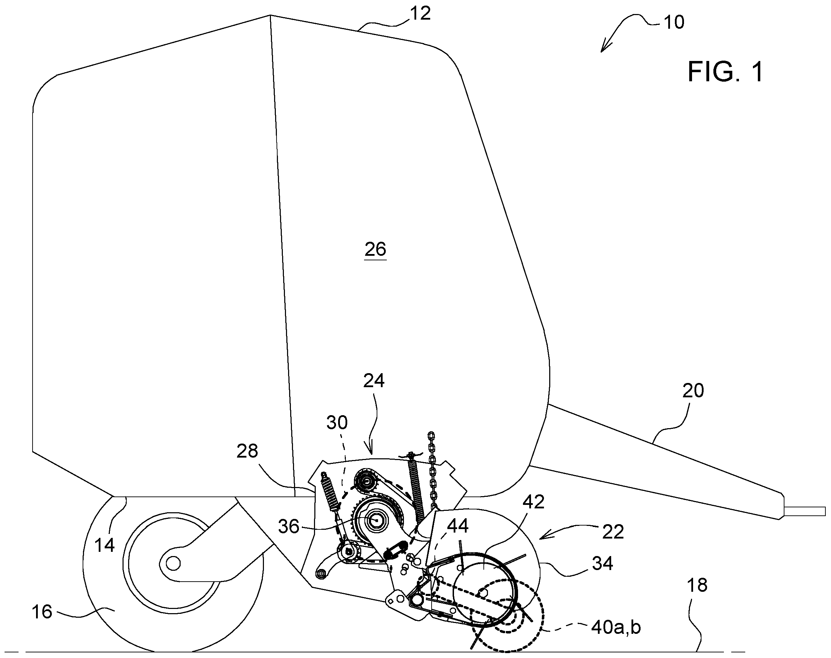

In der Figur 1 der Zeichnung ist eine Ausführungsform eines Arbeitsgeräts 10 dargestellt, das in der Art einer landwirtschaftlichen Presse zur Herstellung rundzylindrischer Ballen aus Erntegut ausgebildet ist. Das Arbeitsgerät 10 weist einen ein Gehäuse 12 tragenden Rahmen 14 auf, der sich über ein Fahrwerk 16 auf dem Untergrund 18 abstützt.

An der Vorderseite des Rahmens 14 ist eine Deichsel 20 vorgesehen, um das Arbeitsgerät 10 an ein nicht gezeigtes Zugfahrzeug, beispielsweise einen Ackerschlepper, anhängen und über ein Feld ziehen zu können. Ein Gutaufnehmer 22 in Form einer Pick-Up dient zur Aufnahme von auf dem Untergrund 18 liegendem Erntegut, z.B. von in einem Schwad abgelegtem Heu oder Stroh. Das von dem Gutaufnehmer 22 aufgenommene Erntegut wird über einen Einlass 24 einem Pressraum 26 zugeführt und dort spiralförmig zu einem rundzylindrischen Ballen aufgerollt, gebunden und anschließend auf dem Untergrund 18 abgelegt.

Gemäß dem vorliegenden Ausführungsbeispiel weist der Gutaufnehmer 22, ein Gehäuse 28, einen Förderrotor 30, zwei Anlenkhebel 32a, b und eine Aufnahmeeinrichtung 34 auf. Der Förderrotor 30 ist um eine sich im Wesentlichen horizontal und quer zur Fahrtrichtung erstreckende Achse 36 drehbar gelagert. Die Anlenkhebel 32a, b wiederum sind schwenkbar um die Achse 36 gelagert und erstrecken sich von dieser bezogen auf die Fahrtrichtung des Arbeitsgeräts 10 zumindest anteilig nach vorn. Die Aufnahmeeinrichtung 34 wird verschieblich zwischen den Anlenkhebeln 32a, b aufgenommen.

Die Aufnahmeeinrichtung 34 weist ein Gehäuse 38, zwei Stützräder 40a, b und eine in der Art eines Zinkenrotor ausgebildete Fördereinrichtung 42 auf. Die Stützräder 40a, b sind an den Seitenwänden 38a, b um eine Radachse 44 schwenkbar, die Fördereinrichtung 42 um eine Rotorachse 46 drehbar gelagert. Darüber hinaus ist eine Federeinrichtung 48 mit einer ersten Feder 50a und einer zweiten Feder 50b vorgesehen. Die Federn 50a, b greifen einenends an einem ersten Befestigungspunkt 52 an einer der Seitenwände 38a, b und andernends an einem zweiten Befestigungspunkt 54 an dem Gehäuse 28 an.

Im Folgenden wird nun detailliert auf die Aufnahme der Aufnahmeeinrichtung 34 an den Anlenkhebeln 32a, b eingegangen. Hierzu weisen die Anlenkhebel 32a, b in einem der Achse 36 gegenüberliegenden Bereich 56 jeweils zwei beabstandete Führungselemente 58a, b auf. Gemäß dem vorliegenden Ausführungsbeispiel sind diese Führungselemente 58a, b in der Art von Langlöchern ausgebildet und parallel angeordnet, wobei sie sowohl in horizontaler als auch vertikaler Richtung beabstandet in die Führungselemente 58a, b eingebracht sind.

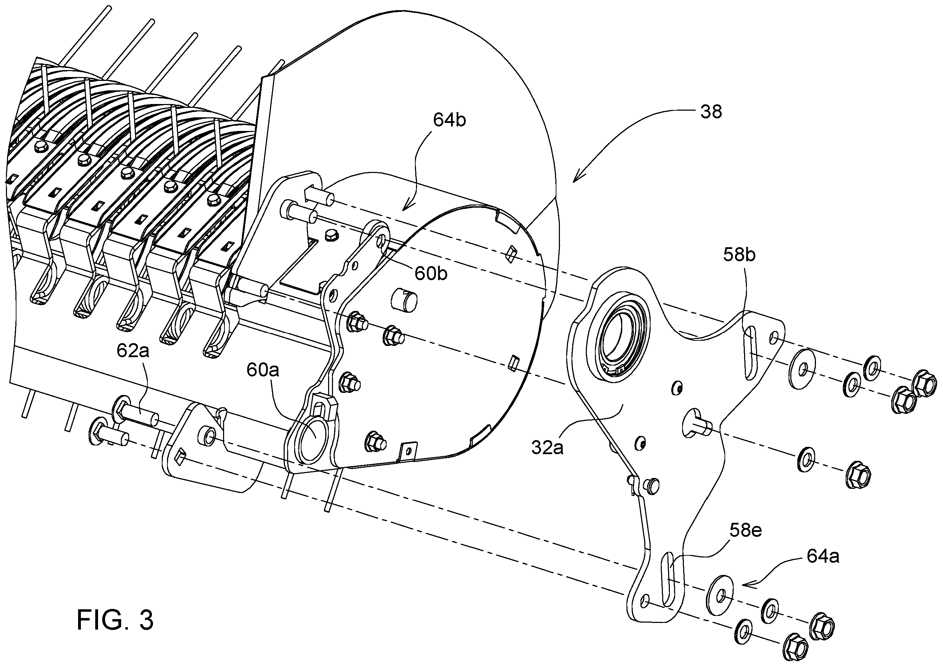

In dem Gehäuse 38 der Aufnahmeeinrichtung 34 sind Ausnehmungen 60a, b (siehe hierzu Figur 3) vorgesehen, in die Lagerbolzen 62a, b eingebracht sind. Die Lagerbolzen 62a, b werden in den Führungselementen 58a, b aufgenommen und mittels entsprechender Sicherungselemente 64a, b, beispielsweise in der Art von Muttern, derart gesichert, dass sie sich in Richtung der Längserstreckung der Führungselemente 58a, b bewegen können.

Darüber hinaus weist der Gutaufnehmer 22 ein Zugmittelgetriebe 66 auf, mittels dem gemäß dem vorliegenden Ausführungsbeispiel zumindest der Förderrotor 30 und die Fördereinrichtung 42 in Drehung versetzt werden können. Das Zugmittelgetriebe 66 wird über eine nicht gezeigte Antriebsscheibe angetrieben und weist ein Zugmittel 68 auf, welches in der Art einer Kette ausgebildet ist. Das Zugmittel 68 umschlingt eine erste Antriebsscheibe 70a, die wirksam mit dem Förderrotor 30, und eine zweite Antriebsscheibe 66b auf, die wirksam mit der Fördereinrichtung 42 verbunden ist. Die Antriebsscheiben 70a, b sind in der Art von Zahnrädern ausgebildet. Darüber hinaus weist das Zugmittelgetriebe 66 eine Spanneinrichtung 72 mit einem federbelasteten Spannarm 74, der eine ebenfalls als Zahnrad ausgebildete Spannscheibe 76 trägt, auf, die das Zugmittel 68 in bekannter Art und Weise spannt bzw. unter Spannung hält.

Im Betrieb stützt sich der Gutaufnehmer 22 über die Stützräder 40a, b auf dem Untergrund ab und folgt dem Untergrund 18, wenn das Arbeitsgerät 10 durch das nicht gezeigte Zugfahrzeug über das Feld gezogen wird. Verändert der Untergrund 18 seine Kontur in Fahrtrichtung so folgt der Gutaufnehmer 22 bzw. insbesondere die Aufnahmeeinrichtung 34 dieser, indem sie bzw. die die Aufnahmeinrichtung 34 tragenden Anlenkhebel 32a, b um die Achse 36 verschwenken.

Häufig verändert sich die Kontur aber auch quer zur Fahrtrichtung. Insbesondere bei besonders breiten Gutaufnehmern, wie sie heute häufig zur Erzielung eines hohen Durchsatzes verwendet werden, kann so zwischen den Stützrädern 40a, b ein durchaus signifikanter Höhenunterschied entstehen. Um einen solchen auszugleichen bzw. der Kontur des Untergrunds besser und/oder schneller folgen zu können, ist es gemäß dem vorliegenden Ausführungsbeispiel vorgesehen, dass die Aufnahmeeinrichtung 34 in den sie tragenden Anlenkhebeln 32a, b im Wesentlichen vertikal verschieblich (durch Pfeile angedeutet) aufgenommen wird.

Die jeweiligen bezogen auf die Fahrtrichtung des Arbeitsgeräts 10 rechtsseitigen Lagerbolzen 62a und die entsprechenden linksseitigen Lagerbolzen 62b (nicht gezeigt) können sich dabei zumindest im Wesentlichen parallel bewegen. Erfordert der Untergrund 18 bzw. die Kontur des Untergrunds 18 aber eine Höhenausgleich, so können sich die rechts- bzw. linksseitigen Lagerbolzen 62a, b vertikal jeweils unabhängig in den Führungselementen 58a, b verschieben. Auf diese Weise kann sich die Aufnahmeeirnichtung 34 pendelnd bewegen, ohne dass hierfür eine feste Pendelachse vorgesehen sein muss. Vielmehr wird ein weiterer Freiheitsgrad zur Verfügung gestellt, der sich mit der rein vertikalen Bewegung der Aufnahmeienrichtung 34 überlagern kann.

Da die entsprechende Aufnahme bzw. Lagerung der Aufnahmeeinrichtung 34 in den sich vertikal erstreckenden Führungselementen 58 in den Anlenkhebeln 32a, b erfolgt, wirkt dieser zusätzliche Freiheitsgrad nicht auf das Zugmittelgetriebe 66 bzw. das Zugmittel 68 und gewährleistet so einen gleichmässigen Antrieb von Förderrotor 38 und Fördereinrichtung 42 auch bei deutlich unebenem Untergrund.

## Patentansprüche

1. Gutaufnehmer (22) für ein landwirtschaftliches Arbeitsgerät (10), mit einem Gehäuse, einer Aufnahmeeinrichtung (34), die sich über wenigstens ein Stützrad (40a, b) auf dem Untergrund (18) abstützt, und wenigstens zwei horizontal beabstandeten Anlenkhebeln (32a, b), die zwischen sich die Aufnahmeeinrichtung (34) aufnehmen, **dadurch gekennzeichnet, dass** die Aufnahmeeinrichtung (34) von den Anlenkhebeln (32a, b) zumindest im Wesentlichen vertikal verschieblich getragen wird.

2. Gutaufnehmer nach Anspruch 1, **dadurch gekennzeichnet, dass** die Anlenkhebel (32a, b) an dem Gehäuse (28) um eine im Wesentlichen horizontale, sich quer zur Fahrtrichtung erstreckende Achse (36) pendelnd gelagert sind.

3. Gutaufnehmer nach Anspruch 1 oder 2, **dadurch gekennzeichnet, dass** jeder der Anlenkhebel (32a, b), wenigstens ein Führungselement (58a, b) zur insbesondere verschieblichen Lagerung der Aufnahmeeinrichtung (34) aufweist.

4. Gutaufnehmer nach einem der vorangehenden Ansprüche, **dadurch gekennzeichnet, dass** wenigstens einer der Anlenkhebel (32a, b) eine Mehrzahl, vorzugsweise zwei, sich insbesondere im Wesentlichen parallel erstreckende Führungselemente (58a, b) aufweist.

5. Gutaufnehmer nach einem der vorangehenden Ansprüche, **dadurch gekennzeichnet, dass** das/die Führungselement(e) (58a, b) in der Art eines Langlochs/ von Langlöchern ausgebildet ist/sind.

6. Gutaufnehmer nach einem der vorherigen Ansprüche, **dadurch gekennzeichnet, dass** ein Förderrotor (30) vorgesehen ist, der vorzugsweise um die Achse (36) rotieren kann.

7. Gutaufnehmer nach einem der vorherigen Ansprüche, **dadurch gekennzeichnet, dass** die Aufnahmeeinrichtung (34) eine vorzugsweise in der Art eines Zinkenrotors ausgebildete, drehbare Fördereinrichtung (42) aufweist.

8. Gutaufnehmer nach einem der Ansprüche 6 oder 7, **dadurch gekennzeichnet, dass** der Förderrotor (30) und/oder die Fördereinrichtung (42) durch ein Zugmittelgetriebe (66) antreibbar sind.

9. Gutaufnehmer nach Anspruch 8, **dadurch gekennzeichnet, dass** das Zugmittelgetriebe (66) in der Art eines Kettenantriebs ausgebildet ist.

10. Arbeitsgerät (10), insbesondere landwirtschaftliches Arbeitsgerät, mit einem Gutaufnehmer (22) nach einem der vorherigen Ansprüche.
